# EUROPÄISCHE PATENTSCHRIFT

(11) **EP 1 036 697 B1**
(45) Veröffentlichungstag und Bekanntmachung des Hinweises auf die Patenterteilung: **28.05.2003**
(21) Anmeldenummer: 00100770.7
(22) Anmeldetag: 15.01.2000
(51) Int. Cl.: B60N 2/24, B60N 2/68

(54) **Fahrgastsitz**
Passenger seat
Siège de passager

(30) Priorität: 18.03.1999 DE 19912111
(43) Veröffentlichungstag der Anmeldung: 20.09.2000
(73) Patentinhaber: Vogelsitze GmbH, 76228 Karlsruhe (DE)
(72) Erfinder: Ehemann, Ernst K., Dipl.-Ing., 76227 Karlsruhe (DE)
(74) Vertreter: Dimmerling, Heinz, Dipl.-Ing.

(56) Entgegenhaltungen:
- EP-A- 0 283 571
- EP-A- 0 330 594
- EP-A- 0 443 065
- EP-A- 0 749 866
- DE-A- 19 523 014

## Beschreibung

Die Erfindung betrifft einen Fahrgastsitz für ein Personenbeförderungsfahrzeug nach dem Oberbegriff des Anspruchs 1, mit wenigstens einem Sitzteil und einem Sitzuntergestell, welches wenigstens eine Querstrebe aufweist, auf der das Sitzteil angeordnet ist.

Ein derartiger Fahrgastsitz ist beispielsweise aus der EP 0 283 571 A1 bekannt. Bei dem bekannten Fahrgastsitz weist eine als Kastenholm ausgebildete Querstrebe Ausnehmungen auf, welche aus Befestigungsschienen mit Nuten ausgebildet sind, welche nach außen offene, im Querschnitt C-förmige Profilschienen bilden, die mit den Kastenholmen ober- und unterseitig verbunden sind. In die Befestigungsschienen werden regelmäßig sogenannte Gewindesteine eingeführt, mittels welcher die Querstrebe einerseits auf Stützfüßen befestigbar ist. Andererseits wird mittels der Gewindesteine das Sitzteil des Fahrgastsitzes mit der Querstrebe verschraubt. Wenngleich eine derartige Befestigung eines Fahrgastsitzes auch sehr große Vorteile bei der Montage bietet, so ist sie insbesondere zur Befestigung von sehr einfachen Sitzen des Niedrigpreisbereiches zu aufwendig.

Aus der EP 0 749 866 A1 ist ein Fahrgastsitz bekannt, bei welchem ein Sitzteil auf einem Sitzuntergestell angeordnet ist. Das Sitzuntergestell weist zwei Querstreben auf, welche eine zylinderförmige Ausnehmung aufweisen, welche seitlich zugänglich sind. Die Querstreben sind so angeordnet, daß die seitlichen Zugänge der zylinderförmigen Ausnehmungen zueinander weisen.

In den Ausnehmungen sind eine seitliche Öffnung aufweisende Buchsen angeordnet, in welchen sich Rohre befinden, an denen das Sitzteil mittels mechanischer Elemente befestigt ist.

Es ist Aufgabe der Erfindung einen eingangs genannten Fahrgastsitz derart auszubilden, daß er auf einfache Weise montierbar ist

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist die Querstrebe an ihrer dem Sitzteil zugewandten Seite zwei in einem Abstand angeordnete Ausnehmungen auf, welche sich von einer ersten Seite der Querstrebe in die Querstrebe erstrecken und jeweils einen in dieselbe Richtung weisenden Hinterschnitt haben, dessen der ersten Seite der Querstrebe zugewandte Wandung im Grund des Hinterschnitts einen größeren Abstand zur ersten Seite der Querstrebe hat, als an der Öffnung des Hinterschnitts. Des weiteren hat das Sitzteil an seiner der Querstrebe zugewandten Seite zwei zu den Hinterschnitten korrespondierende Hervorstehungen, welche sich bis hinter die Hinterschnitte erstrecken.

Dadurch, daß die der ersten Außenseite der Querstrebe zugewandte Wandung im Grund des Hinterschnitts einen größeren Abstand zur ersten Außenseite der Querstrebe hat, als am Beginn des Hinterschnitts, wird die Hervorstehung beim Einführen in den Hinterschnitt in die Querstrebe hineingezogen, wodurch das Sitzteil auf die Querstrebe gezogen wird. Die der ersten Außenseite der Querstrebe zugewandte Wandung des Hinterschnitts kann beispielsweise eine Gerade sein, welche in einem Winkel zur ersten Außenseite der Querstrebe verläuft, vorausgesetzt, daß diese ebenfalls gerade ausgebildet ist Der Hinterschnitt könnte dann V-förmig ausgebildet sein.

Die der ersten Außenseite der Querstrebe zugewandte Wandung des Hinterschnitts kann aber auch einen kurvenförmigen Verlauf haben. Besonders vorteilhaft ist es, wenn der Hinterschnitt in seinem Grund einen Radius aufweist, wobei dann die Hervorstehung an ihrem dem Sitzteil abgewandten Ende der Form des Hinterschnitts entsprechend ausgebildet sein sollte, wie dies bei einer besonderen Ausführungsform der Erfindung der Fall ist. Dadurch, daß der Hinterschnitt in seinem Grund einen Radius aufweist und die Hervorstehung an ihrem dem Sitzteil abgewandten Ende entsprechend ausgebildet ist, fügt sich die Hervorstehung sehr gut in den Hinterschnitt ein. Durch den Radius wird erreicht, daß die Hervorstehung zentriert im Hinterschnitt aufgenommen wird. Des weiteren bewirkt der Radius, daß die Hervorstehung über einen größeren Bereich fest an der Wandung des Hinterschnitts anliegt. Hierbei ist es besonders günstig, daß die Hervorstehung an Stellen an der Wandung des Hinterschnitts anliegt, welche in einem Winkel von 90 Grad zueinander angeordnet sind. Hierdurch ist das Sitzteil im eingebauten Zustand in waagrechter und senkrechter Richtung fixiert.

Bei einer weiteren Ausführungsform der Erfindung ist vorgesehen, daß ein Halteelement vorhanden ist, mittels welchem die Hervorstehung in der Ausnehmung fixiert ist. Das Halteelement ist dabei in vorteilhafter Weise mit der Querstrebe verschraubt. Die Anordnung des Halteelements an der Querstrebe ist dabei in vorteilhafter Weise derart vorzunehmen, daß das Halteelement an der dem Grund des Hinterschnitts abgewandten Seite an die Hervorstehung angreift. Hierdurch wird die Hervorstehung in den Hinterschnitt hineingedrückt wodurch die zuvor beschriebene Zentrierung und Fixierung erfolgt. Das Sitzteil kann somit durch einfaches Verschrauben des Halteelements mit der Querstrebe fest mit der Querstrebe verbunden werden.

Bei einer weiteren Ausführungsform der Erfindung ist vorgesehen, daß die Hervorstehung mit dem Sitzteil einstückig ausgebildet ist. Dies wirkt sich besonders günstig auf die Festigkeit der Verbindung der Hervorstehung mit dem Sitzteil aus. Darüber hinaus läßt sich das Sitzteil sehr einfach handhaben, was sich besonders günstig bei der Befestigung auf die Querstrebe auswirkt.

Gemäß der Erfindung ist vorgesehen, daß die Querstrebe zwei in einem Abstand angeordnete Hinterschnitte aufweist und das Sitzteil zwei zu den Hinterschnitten korrespondierende Hervorstehungen hat. Die Hinterschnitte sowie die Hervorstehungen können identisch ausgebildet sein. Eine derartige Ausführungsform läßt sich besonders einfach montieren. Das Sitzteil braucht lediglich mit seinen Hervorstehungen auf die Ausnehmungen mit den Hinterschnitten aufgesetzt und mit der Querstrebe verbunden werden. Die Verbindung mit der Querstrebe kann dabei, wie bereits ausgeführt wurde, mittels eines Halteelements vorgenommen werden, welches an der dem Grund des entsprechenden Hinterschnitts abgewandten Seite der entsprechenden Hervorstehung angreift. Hierdurch werden beide Hervorstehungen in die entsprechenden Hinterschnitte eingepreßt, so daß das Sitzteil fest auf der Querstrebe befestigt ist. Wenngleich es auch genügt, ein Halteelement vorzusehen, welches auf die in Sitzrichtung vordere Hervorstehung angreift, so können jedoch auch zwei Halteelemente vorgesehen sein, welche an beiden Hervorstehungen angreifen.

In besonders vorteilhafter Weise ist die Querstrebe als Kastenholm ausgebildet, bei welchem die Ausnehmungen mit den Hinterschnitten als schienenförmiges Profilteil ausgebildet sind und welcher an seiner dem Sitzteil abgewandten zweiten Seite wenigstens eine T-Nut aufweist. Die Hervorstehungen können sich hierbei ebenfalls über die gesamte Breite des Sitzteils erstrecken. Sie können sich aber auch nur über einen Teil der Breite des Sitzteils erstrecken, wobei dann mehrere Hervorstehungen nebeneinander angeordnet sein können. Der Querträger braucht dann keine durchgehende Ausnehmung mehr aufweisen, sondern lediglich nur noch an den zu den Hervorstehungen korrespondierenden Stellen Ausnehmungen mit Hinterschnitten aufweisen. Hierdurch ist das Sitzteil in seitlicher Richtung fixiert.

Weitere Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine aus einem Sitzteil und Querstrebe mit Halteelement bestehende erfindungsgemäße Anordnung in Explosionsdarstellung von der Seite und
- Figur 2: eine erfindungsgemäße Querstrebe im Querschnitt.

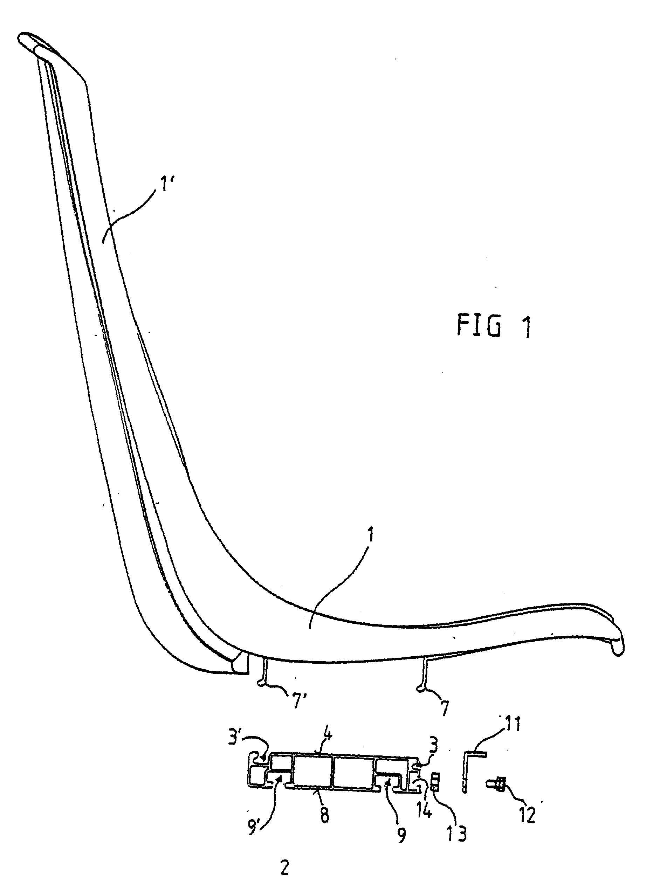

Wie der Figur 1 entnommen werden kann, besteht eine Sitzschale aus einem Sitzteil 1 und einem Rückenteil 1'. Unterhalb des Sitzteils 1 sind Hervorstehungen 7, 7' angeordnet, welche identisch ausgebildet sind und welche mit dem Sitzteil 1 einstükkig ausgebildet sind. Die Hervorstehungen 7, 7' weisen an ihrem dem Sitzteil 1 abgewandten Ende einen gegen die Sitzrichtung abgebogenen Bereich auf. Der abgebogene Bereich weist einen Radius auf.

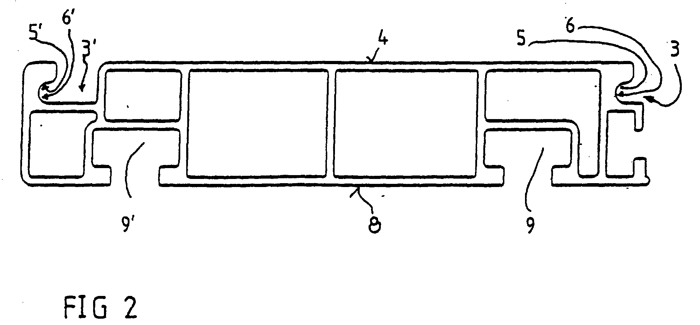

Eine als Kastenholm ausgebildete Querstrebe 2 weist an ihrer dem Sitzteil 1 zugewandten ersten Seite eine erste Ausnehmung 3 und eine zweite Ausnehmung 3' auf, welche jeweils einen Hinterschnitt haben. Wie insbesondere der Figur 2 entnommen werden kann, weisen die Ausnehmungen 3, 3' im Grund 6, 6' ihres Hinterschnitts einen Radius auf. Hierdurch hat die der ersten Außenseite 4 der Querstrebe 2 zugewandte Wandung 5, 5' im Grund 6, 6' des Hinterschnitts einen größeren Abstand zur ersten Außenseite 4 der Querstrebe 2, als zu Beginn des Hinterschnittes.

Die Radien der Hinterschnitte entsprechen den Radien der Hervorstehungen 7, 7'. Hierdurch lassen sich die Hervorstehungen 7, 7' auf einfache Weise in den Hinterschnitten zentrieren.

Zur Befestigung des Sitzteils 1 auf der Querstrebe 2 wird das Sitzteil 1 so auf die Querstrebe 2 aufgesetzt, daß sich die Hervorstehungen 7, 7' in die Ausnehmungen 3, 3' erstrecken. Mittels eines Halteelements 11, welches mit der Querstrebe 2 in Sitzrichtung vorne verschraubt werden kann, wird auf die erste Hervorstehung 7 gegen die Sitzrichtung ein Druck ausgeübt. Hierdurch gleiten die abgebogenen Bereiche der Hervorstehungen 7, 7' in den jeweiligen Hinterschnitt der Ausnehmungen 3, 3', wobei sich die Radien der Hervorstehungen 7, 7' an die dem Grund 6, 6' der Hinterschnitte ausgebildete Radien anlegen. Durch die Radien wird bewirkt, daß das Sitzteil 1 auf die Querstrebe 2 gezogen wird.

Zur Befestigung des Halteelements 11 weist die Querstrebe 2 in Sitzrichtung vorne eine T-Nut 14 auf, in welcher ein oder mehrere Gewindesteine 13 angeordnet ist beziehungsweise sind. Das Halteelement 11 wird dann mittels einer beziehungsweise mehrerer Schrauben 12, welche in den beziehungsweise in die Gewindesteine 13 eingeschraubt werden, an der Querstrebe 2 befestigt.

Zur Befestigung der Querstrebe 2 beispielsweise auf nicht gezeigten Stützfüßen, weist die Querstrebe 2 an ihrer dem Sitzteil 1 abgewandten zweiten Seite 8 T-Nuten 9, 9' auf, in welche ebenfalls Gewindesteine einführbar sind, mittels welcher die Querstrebe 2 mit den Stützfüßen verschraubt werden kann.

## Patentansprüche

1. Fahrgastsitz insbesondere für ein Personenbeförderungsfahrzeug, mit wenigstens einem Sitzteil (1) und einem Sitzuntergestell, welches wenigstens eine Querstrebe (2) aufweist, auf der das Sitzteil (1) angeordnet ist, wobei
die Querstrebe (2) an ihrer dem Sitzteil (1) zugewandten ersten Seite (4) zwei in einem Abstand angeordnete Ausnehmungen (3,3') aufweist, welche sich von der ersten Seite (4) in die Querstrebe (2) erstrecken und jeweils einen in dieselbe Richtung weisenden Hinterschnitt haben, dessen der ersten Seite (4) der Querstrebe (2) zugewandte Wandung (5,5') im Grund (6,6') des Hinterschnitts einen größeren Abstand zur ersten Seite (4) der Querstrebe (2) hat, als am Anfang des Hinterschnitts, und das Sitzteil (1) an seiner der Querstrebe (2) zugewandten Seite zwei zu den Hinterschnitten korrespondierende Hervorstehungen (7,7') hat, welche sich bis in die Hinterschnitte erstrecken.

2. Fahrgastsitz nach Anspruch 1,
**dadurch gekennzeichnet,**
**daß** der Hinterschnitt in seinem Grund (6) einen Radius aufweist und die Hervorstehung (7) an ihrem dem Sitzteil (1) abgewandten Ende der Form des Hinterschnitts entsprechend ausgebildet ist.

3. Fahrgastsitz nach einem der Ansprüche 1 oder 2,
**dadurch gekennzeichnet,**
**daß** ein Halteelement (11) vorhanden ist, mittels welchem die Hervorstehung (7) in der Ausnehmung (3) fixiert ist.

4. Fahrgastsitz nach Anspruch 3,
**dadurch gekennzeichnet,**
**daß** das Halteelement (11) mit der Querstrebe (2) verschraubt ist.

5. Fahrgastsitz nach einem der Ansprüche 1 bis 4,
**dadurch gekennzeichnet,**
**daß** die Hervorstehung (7) mit dem Sitzteil (1) einstückig ausgebildet ist.

6. Fahrgastsitz nach einem der Ansprüche 1 bis 5,
**dadurch gekennzeichnet,**
**daß** die Querstrebe (2) als Kastenholm ausgebildet ist, welcher an seiner dem Sitzteil (1) abgewandten zweiten Seite wenigstens eine T-Nut (9) aufweist.

## Claims

1. Passenger seat, in particular for a passenger-carrying motor vehicle, having at least one seat portion (1) and one seat chassis which has at least one transverse strut (2) on which the seat portion (1) is arranged, whereby on its first side (4) facing towards the seat portion (1), the transverse strut (2) has two recesses (3, 3') arranged at a separation, which extend from the first side (4) into the transverse strut (2) and each have an undercut facing in the same direction, the wall (5, 5') in the base (6, 6') of said undercut facing towards the first side (4) of the transverse strut (2) having a larger separation from the first side (4) of the transverse strut (2) than at the beginning of the undercut, and at its side facing towards the transverse strut (2), the seat portion (1) has two projections (7, 7') corresponding to the undercuts, which extend into the undercuts.

2. Passenger seat according to Claim 1, **characterised in that** the undercut has a radius in its base (6) and the projection (7) is formed on its end facing away from the seat portion (1) to correspond to the form of the undercut.

3. Passenger seat according to Claim 1 or 2, **characterised in that** a holding element (11) is provided by means of which the projection (7) is fixed in the recess (3).

4. Passenger seat according to Claim 3, **characterised in that** the holding element (11) is screwed to the transverse strut (2).

5. Passenger seat according to one of the claims 1 to 4, **characterised in that** the projection (7) is formed in one piece with the seat portion (1).

6. Passenger seat according to one of the claims 1 to 5, **characterised in that** the transverse strut (2) is designed as a box spar having on its second side facing away from the seat portion (1) at least one T-slot (9).

## Revendications

1. Siège de passager, notamment pour un véhicule de transport de personnes, avec au moins une partie d'assise (1) et une structure de support de siège qui présente au moins un montant transversal (2) sur lequel est disposée la partie d'assise (1), le montant transversal (2) présentant, sur son premier côté (4) tourné vers là partie d'assise (1), deux évidements (3, 3') disposés à distance l'un de l'autre, qui s'étendent à partir, du premier côté (4) dans le montant transversal (2) et qui possèdent respectivement une contre-dépouille dirigée dans la même direction, dont la paroi (5, 5') tournée vers le premier côté (4) du montant transversal (2) est plus éloignée du premier côté (4) du montant transversal (2) dans le fond (6, 6') de la contre-dépouille qu'au début de la contre-dépouille, et la partie d'assise (1) possédant, sur son côté tourné vers le montant transversal (2), deux saillies (7, 7') en correspondance avec les contre-dépouilles, saillies qui s'étendent jusque dans les contre-dépouilles.

2. Siège de passager selon la revendication 1, **caractérisé en ce que** la contre-dépouille présente un rayon dans son fond (6) et la saillie (7) est configurée, à son extrémité opposée à la partie d'assise (1), en correspondance avec la forme de la contre-dépouille.

3. Siège de passager selon la revendication 1 ou 2, **caractérisé en ce qu'**il est prévu un élément de maintien (11), au moyen duquel la saillie (7) est immobilisée dans l'évidement (3).

4. Siège de passager selon la revendication 3, **caractérisé en ce que** l'élément de maintien (11) est assemblé par vissage au montant transversal (2).

5. Siège de passager selon l'une des revendications 1 à 4, **caractérisé en ce que** la saillie (7) est réalisée d'un seul tenant avec la partie d'assise (1).

6. Siège de passager selon l'une des revendications 1 à 5, **caractérisé en ce que** le montant transversal (2) est réalisé sous forme de montant en caisson, qui présente au moins une rainure en T (9) sur son deuxième côté, opposé à la partie d'assise (1).
